# EUROPÄISCHE PATENTANMELDUNG

(11) **EP 2 067 614 A1**
(43) Veröffentlichungstag der Anmeldung: **10.06.2009**
(21) Anmeldenummer: 08169643.7
(22) Anmeldetag: 21.11.2008
(51) Int. Cl.: B32B 5/28, C09J 7/04, D06N 7/00

(54) **Geräuschdämpfendes und hoch abriebfestes Band insbesondere für die Bandagierung von Kabelbäumen in Automobilen**

(30) Priorität: 04.12.2007 DE 102007058460
(71) Anmelder: tesa SE, 20253 Hamburg (DE)
(72) Erfinder: Kopf, Dr. Patrik, 22417, Hamburg (DE); Wahlers-Schmidlin, Andreas, 21720, Guderhandviertel (DE); Wienke, Daniel, 22043, Hamburg (DE)

(57) **Zusammenfassung**

Geräuschdämpfendes und hoch abriebfestes Band, vorzugsweise zum Umhüllen von langgestrecktem Gut wie insbesondere Leitungen oder Kabelsätze, aus einem Träger, der zumindest aus drei Schichten besteht, und zwar einer ersten Deckschicht A, einer zweiten Deckschicht B, einer Zwischenschicht C, die sich zwischen den Deckschichten A und B befindet und die zumindest abschnittsweise mit den Deckschichten A und B fest verbunden ist, dadurch gekennzeichnet, dass die Deckschicht A aus einem Nähwirkvlies besteht, die Deckschicht B aus einem Vlies und die Zwischenschicht C aus einer Folie, die beidseitig mit einer viskoelastischen Klebemasse ausgerüstet ist.

## Beschreibung

Die Erfindung betrifft ein geräuschdämpfendes und hoch abriebfestes Band, vorzugsweise zum Umhüllen von langgestrecktem Gut wie insbesondere Leitungen oder Kabelsätze, aus einem Träger, der zumindest aus drei Schichten besteht, und zwar einer ersten Deckschicht A, einer zweiten Deckschicht B und einer Zwischenschicht C, die sich zwischen den Deckschichten A und B befindet und die zumindest abschnittsweise mit den Deckschichten A und B fest verbunden ist, und auf den vorzugsweise zumindest auf einer Seite eine druckempfindliche Klebebeschichtung aufgebracht ist. Des Weiteren betrifft die Erfindung die Verwendung des Bands sowie einen Kabelbaum, der mit dem erfindungsgemäßen Band ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Aus der DE 298 23 462 U1 ist ein Klebeband mit einem zweischichtigen Träger bekannt, dessen untere Schicht mit einer Klebemasse beschichtet ist. Die obere Schicht des Trägers besteht aus Wirkwarenvelours, die untere bildet ein Synthetikfaservlies. Beide Schichten sind zumindest bereichsweise verklebt, insbesondere mit einem thermoplastischen Vlies.
Wie dem Fachmann bekannt ist, ist Wirkwarenvelours aufwändig herzustellen und teuer.

In der DE 101 49 975 A1 wird ein zweischichtiger Aufbau eines Trägers in einem Klebeband beschrieben, nämlich eine textile Schicht plus eine darauf kalandrierte Folie, bevorzugt eine PVC-Folie. Der Kleber ist eine Acrylatmasse.
Mit diesem Aufbau sind keine hohen Abriebfestigkeiten erreichbar.

Die EP 1 723 210 A1 offenbart als Träger eine oberste Deckschicht A, die mit einer zweiten Schicht C über die gesamte Fläche der Deckschicht A fest verbunden ist, insbesondere vernäht/vernadelt, wobei die Deckschicht A aus einem Velour, Gelege, Gewebe oder Gewirke, insbesondere einem PET-Filamentgewebe oder einem PolyamidGewebe, und die Schicht C aus einem porösen Flachengebilde wie einem Textil mit einer offenen, aber stabilen dreidimensionalen Struktur, aus einem Schaumstoff oder einer geschäumten Folie besteht. Die Schicht C is voluminös, 0,2 bis 3 mm dick und absorbiert die Abriebenergie und stellt eine Geräuschdämpfung sicher. Auf der Schicht C, und zwar auf der der Schicht A gegenüberliegenden Seite, ist eine weitere Schicht B aus Velour, Gewebe oder Gewirke vorhanden.
Allerdings tragen dicke Zwischenschichten wie C stark auf. Des Weiteren sind vernadelte Verbünde (wie die Schichten A/C) teuer. Auch Vliesstoffe nach den Typen Kunit und Multiknit sind sehr teuer, machen einen solchen Verbund praktisch unbezahlbar und sind zu stark auftragend.

Die W02005/084944 A2 beschreibt als Trägermaterial eine oberste Schicht aus Gewebe oder Gewirke und eine unterste Schicht aus Gewebe oder Gewirke, wobei dazwischen eine Zwischenschicht aus viskoelastischer Klebemasse oder einem beidseitig ausgerüsteten Klebeband vorhanden ist. Es werden Vliese vor allem als Zwischenschicht zur Erreichung der Geräuschdämpfung erwähnt.
Die Geräuschdämpfung ist mit einer viskoelastischen Klebmasse allein nicht zu erreichen. Gewebe dämpfen nicht, Gewirke als dämpfende Materialien sind sehr teuer. Vliese sind kostengünstig und geräuschdämpfend. Die Folienschicht in der Zwischenschicht wird nicht zur Erhöhung der Abriebfestigkeit genutzt, sondern als Barriereschicht oder Dämpfungsschicht.

Die EP 1 063 747 A1 zeigt als Klebebandträger zwei miteinander verbundene Vliese.
Zwei Vliese gewährleisten allerdings nicht besonders hohe Abriebwerte.

Die Abriebbeständigkeit ist ein Maß für die Scheuerfestigkeit von Klebebändern.
Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. Hier wird der Prüfling (zum Beispiel die isolierte Kupferleitung oder aber das auf einen Metalldorn geklebte Wickelband) mit einem dünnen Stahldraht unter definierten Hubgeometrien und Gewichtsbelastung beansprucht, bis die Schutzhülle durchgerieben ist und es über einen Kurzschluss zum Stoppen des mitlaufenden Zählwerkes kommt.

Sofern nicht anders angegeben, beziehen sich alle Angaben zur Abriebfestigkeit auf diese ISO 6722-Methode. Das Klebeband wird dazu einlagig in Längsrichtung auf einem Metalldorn von 10 mm Durchmesser geklebt, die Scheuerbewegung findet mittig auf dem Klebeband mit einer Gewichtsbelastung von 7 N statt. Als Reibkörper wird ein Stahldraht gemäß ISO 8458-2 von 0,45 mm Durchmesser verwendet. Als Maßzahl für die Abriebfestigkeit wird die Anzahl der Hübe bis zum Kurzschluss angegeben. Bei sehr hohen Abriebfestigkeiten hat es sich bewährt, das Klebeband auch auf einem Metalldorn mit 5 mm Durchmesser zu messen. Dadurch kann auch eine Abriebfestigkeit gegenüber schärferen Gegenständen wie zum Beispiel einer Metallkante simuliert werden.

Die Geräuschdämpfungswirkung ist ein Maß für die geräuschmindernde Wirkung von Klebebändern.
Die physikalische Messung der Geräuschdämpfungswirkung erfolgt gemäß der Methode, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

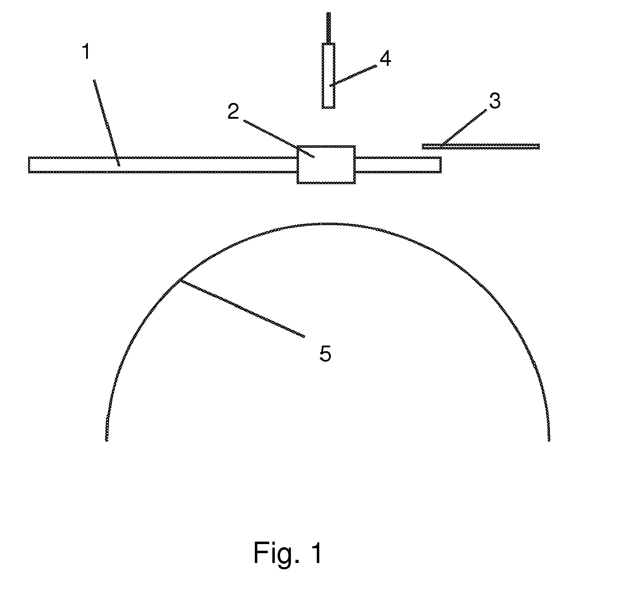

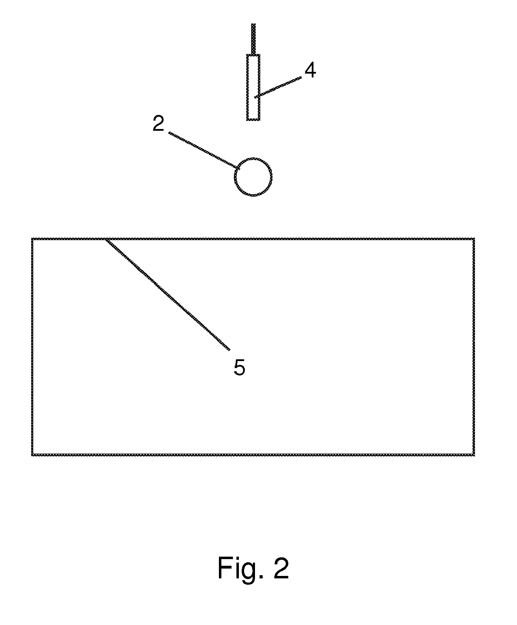

Im Folgenden wird in Verbindung mit den Figuren 1 und 2 das Messverfahren nach der BMW-Norm GS 95008-3 aus Mai 2000 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab (1) mit 8 mm Durchmesser derartig mit dem Prüfling (2) - sprich Klebeband - umwickelt, dass sich Hebellängen von 220 mm und 150 mm ergeben. Der umwickelte Stahlstab (1) wird bis zur Arretierung (3) auf die Fallhöhe und mit einem Gewicht von ca. 16 g auf ein Aluminiumblech (5) fallengelassen. Das Aluminiumblech (5), das im unverformten Zustand 350 x 190 x 0,3 [mm] misst, wird halbtonnenförmig unter dem Prüfling (2) angeordnet, so dass sich eine Weite von 290 mm ergibt.
Das Gesamtschallergebnis wird mittels eines über der Prüfanordnung befindlichen Mikrofons (4) in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Neben den genannten Meßmethoden werden die Klebebänder werden gemäß der Automobilprüfungsrichtlinie LV 312 (Ausgabe Januar 2006) in Abriebklassen (Klasse A gleich geringe Abriebbeständigkeit bis Klasse E gleich höchste Abriebbeständigkeit) sowie in Geräuschdämpfungsklassen (Klasse A gleich geringe Geräuschdämpfung bis Klasse E gleich höchste Geräuschdämpfung, die Messung erfolgt in dB (A)) eingeteilt.

Die folgende Tabelle bietet eine Übersicht über die beschriebene Klasseneinteilung:

| Klasse | Einstufung | Anforderung Anzahl Hübe | Anforderung dB(A) Dämpfung |
|---|---|---|---|
| A | kein/gering | <100 | 0 bis <2 |
| B | gering | 100 bis 499 | >2 bis <5 |
| C | mittel | 500 bis 999 | >5 bis <10 |
| D | hoch | 1.000 bis 4.999 | >10 bis <15 |
| E | sehr hoch | >5.000 | >15 |

Aufgabe der Erfindung ist es, gegenüber dem Stand der Technik eine merkliche Verbesserung zu erzielen und ein Band bereitzustellen, welches die Möglichkeit zur Bandagierung von Einzelleitungen zu Kabelsätzen mit hohem Schutz gegen mechanische Schädigungen durch Scheuern und Reiben an scharfen Kanten, Graten, oder Schweißpunkten kombiniert und gleichzeitig eine sehr hohe Geräuschdämpfung aufweist.

Gelöst wird diese Aufgabe durch ein Band, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Bands sowie ein mit dem Band ummantelter Kabelbaum vom Erfindungsgedanken umfasst.

Demgemäß betrifft die Erfindung ein geräuschdämpfendes und hoch abriebfestes Band, vorzugsweise zum Umhüllen von langgestrecktem Gut wie insbesondere Leitungen oder Kabelsätze, aus einem Träger, der zumindest aus drei Schichten besteht, und zwar
- einer ersten Deckschicht A,
- einer zweiten Deckschicht B,
- einer Zwischenschicht C, die sich zwischen den Deckschichten A und B befindet und die zumindest abschnittsweise mit den Deckschichten A und B fest verbunden ist,
wobei
- die Deckschicht A aus einem Nähwirkvlies besteht,
- die Deckschicht B aus einem Vlies und
- die Zwischenschicht C aus einer Folie, die beidseitig mit einer viskoelastischen Klebemasse ausgerüstet ist.

Ein Nähwirkvlies besteht aus einem Faservlies oder Spinnvlies, vorzugsweise quergelegt, das entweder mit Hilfe von Fäden in einer Nähwirkmaschine des Typs Maliwatt oder durch Vermaschen der Fasern in einer Nähwirkmaschine des Typs Malivlies verfestigt ist.

Gemäß einer ersten vorteilhaften Ausführungsform der Erfindung ist zumindest einseitig auf dem Träger eine Klebebeschichtung aufgebracht, vorzugsweise auf der Deckschicht B, so dass sich ein einseitiges Klebeband ergibt.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Weiter vorzugsweise ist die Klebebeschichtung eine selbstklebende Klebebeschichtung besonders auf Basis von Kautschuk-, Acrylat- oder Silikon.

Das Auftragsgewicht der Klebemasse auf dem Träger bewegt sich vorteilhafterweise im Bereich zwischen 20 bis 100 g/m².

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Gemäß einer weiteren vorteilhaften Ausführungsform der Erfindung besteht die Folie in der Zwischenschicht C aus Polymeren wie PVC, Polyethylen, Polypropylen, Polyester, Polyurethan oder Polyamid.

Die Folie in der Zwischenschicht C weist vorzugsweise eine Dicke von 5 bis 150 µm, insbesondere 12 bis 50 µm auf.

Die viskoelastische Klebemasse auf der beidseitig ausgerüsteten Folie ist vorzugsweise eine Selbstklebemasse auf Basis von Naturkautschuk, Polyacrylaten, Synthesekautschuk oder Silikonen, bevorzugt auf Basis von Polyacrylat.

Als Viskoelastizität bezeichnet man die zeit-, temperatur- und frequenzabhängige Elastizität von polymeren Schmelzen oder Festkörpern (Kunststoffen). Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut.

Erfindungsgemäß besteht die Deckschicht A aus einem Nähwirkvlies und die Deckschicht B aus einem Vlies, wobei unter "Vlies" zumindest textile Flächengebilde gemäß EN 29092 (1988) sowie Nähwirkvliese und ähnliche Systeme zu verstehen sind.

Als Vliesstoffe für die Deckschicht B kommen besonders Stapelfaservliese, jedoch auch Filament-, Meltblown- sowie Spinnvliese in Frage, die allesamt bevorzugt zusätzlich verfestigt sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern (mittels Luft- oder Wasserstrahlen), durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.
Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die Deckschicht A kommen zwingend, für die Deckschicht B in möglichen Ausführungsformen Vliese zum Einsatz, die durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird.
Als Vlies kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.
Schließlich sind auch Nähvliese geeignet. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind.

Gemäß einer besonders vorteilhaften Ausführungsform der Erfindung wird für die Deckschicht B als Vlies ein Nadelvlies gewählt, bevorzugt mit einem Flächengewicht von 40 bis 250 g/m², besonders bevorzugt mit einem Flächengewicht von 80 bis 150 g/m².
Gemäß einer weiteren vorteilhaften Fortbildung weist das Nähwirkvlies der Deckschicht A ein Flächengewicht von 60 bis 300 g/m², insbesondere von 150 bis 200 g/m² auf.

Als Ausgangsmaterialien für die Deckschichten sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung eingesetzt werden. Insbesondere verschleißfeste Polymere wie Polyester, Polyolefine, Polyamide oder Glas- oder Carbonfasern Verwendung.

Um aus dem Träger ein Selbstklebeband herzustellen, beziehungsweise für die viskoelastische Klebemasse der Zwischenschicht C kann auf alle bekannten Klebemassensysteme zurückgegriffen werden. Neben Natur- oder Synthesekautschuk basierten Klebemassen sind Silikonklebemassen sowie Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Als Beschichtungstechnologie kommen bekannte Systeme zum Zuge, wobei sich Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.
Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.
Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere acResin 258UV, von der BASF geführt wird. Diese Klebemasse mit niedrigem K-Wert erhält ihre anwendungsgerechten Eigenschaften durch eine abschließende strahlenchemisch ausgelöste Vernetzung.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.
Wird das Klebeband zur Ummantelung eines Kabelbaums eingesetzt, indem das Klebeband in einer spiralförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.
Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.
Für das sichere und wirtschaftliche Aufbringen des Klebebands in besagter spiralförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Besonders vorzugsweise verbleiben ein oder zwei Klebestreifen, deren Gesamtbreite 20 bis 50 % der Breite des Trägers ausmacht.

Insbesondere wenn die Klebebeschichtung nicht vollflächig erfolgt, sondern beispielsweise streifenförmig, beziehen sich die angegebenen Prozentzahlen auf die Breite der Streifen der Eindeckung in Bezug auf die Breite des Trägers, sprich erfindungsgemäß weisen der oder die Streifen der Eindeckung eine Breite auf, die zwischen 20 und 90 % der Breite des Trägers ausmacht.

Als Materialien für die Eindeckung kommen die insbesondere für Kabelbandagierungsanwendungen üblichen Folien basierend auf Polyolefinen (zum Beispiel Polyethylen-, Polypropylen-, mono- oder biaxial orientierte Polypropylenfolien, Polyester-, PA-, und andere Folien) oder PVC in Betracht, bevorzugt solche mit Weichmachergehalten zwischen 20 und 60 phr.

Des Weiteren können die Deckschichten und/oder die Klebebeschichtung beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet sein. Die Flammschutzmittel können auch bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Eine besonders bevorzugte Variante des erfindungsgemäßen Bandes ist aufgebaut wie folgt:
- die Deckschicht A besteht aus einem Nähwirkvlies mit 60 bis 300 g/m²,
- die Deckschicht B besteht einem Nadelvlies mit 40 bis 250 g/m² und
- die Zwischenschicht C besteht aus einer mit Polyacrylatklebmasse beidseitig ausgerüsteten, 10 bis 70 µm, vorzugswesie 12 bis 50 µm dicken Polyesterfolie,
wobei die Auftragsgewichte der Polyacrylatklebemasse jeweils 20 bis 200 g/m², insbesondere 80 bis 120 g/m² betragen.

Das Klebeband kann vorzugsweise eine Abriebbeständigkeit nach LV 312 (Ausgabe Januar 2006) aufweisen, nach der eine Anzahl von Hüben von mehr als 5000, vorzugsweise mehr als 16000 überstanden werden.

Dann kann das Klebeband eine Geräuschdämpfung nach LV 312 (Ausgabe Januar 2006) von mehr als 10 dB (A), insbesondere mehr 15 dB (A) aufweisen.

Um die Darreichung des Klebebands zu optimieren, erstrecken sich in einer bevorzugten Ausführungsform der Erfindung Schwächungslinien über die gesamte Breite des Klebebands.
Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet. Das Klebeband ist somit in Querrichtung von Hand einreißbar
Eine weitere Verbesserung bei der Anwendung des Klebebands lässt sich erzielen, wenn das Klebeband in bevorzugt regelmäßigen Abständen komplett durchtrennt ist und als so genannte "kiss-cut Stanzlinge" auf Trennpapier aufgebracht ist. Auf diese Weise können durch Verwendung eines Dispensers die einzelnen Stanzlinge gezielt verspendet werden.
Bevorzugt sind die Schwächungslinien in Form von Perforationen ausgestaltet.
Es lassen sich auf diese Weise Kanten zwischen den einzelnen Abschnitten erzielen, die sehr fusselfrei sind, also ein unerwünschtes Ausfransen vermieden wird.
Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen. Wird wie beim Laser- oder Ultraschallschneiden ein Teil der Energie als Wärme in das Material eingebracht, lassen sich im Schneidbereich das Material verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.
Die Höhe der Stachel beziehungsweise Messer auf den Stanzwalzen beträgt bevorzugt 150 % der Dicke des Klebebands.
Das Loch-Steg-Verhältnis bei der Perforierung, also wie viel Millimeter hält das Material zusammen ("Brücke"), wie viel Millimeter sind durchgetrennt, bestimmt, wie leicht das Klebeband einzureißen ist. Des Weiteren beeinflusst dies Verhältnis letztlich auch, wie fusselfrei die Abrisskante zu erhalten ist.
Vorzugsweise beträgt die Stegbreite ungefähr 2 mm und die Schnittbreite zwischen den Stegen ungefähr 5 mm, das heißt, es wechseln sich 2 mm breite Stege mit 5 mm Einschnitten ab. Das Loch-Steg-Verhältnis beträgt demgemäß vorzugsweise 2:5.
Mit dieser Schwächung des Materials lässt sich eine ausreichend geringe Abreißkraft erzielen.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich ist vom Erfindungsgedanken auch ein langgestrecktes Gut wie insbesondere ein Kabelsatz umfasst, ummantelt mit dem erfindungsgemäßen Klebeband sowie ein Fahrzeug, enthaltend einen erfindungsgemäß ummantelten Kabelbaum.

Anhand der nachfolgend beschriebenen Figuren wird das erfindungsgemäße Klebeband in einer besonders vorteilhaften Ausführungsform näher erläutert, ohne hiermit die Erfindung einschränken zu wollen.

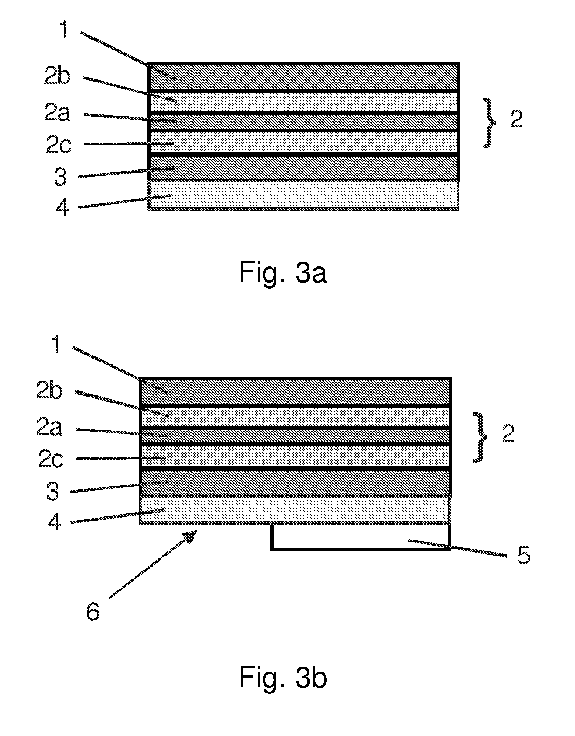

Es zeigen
- Figur 3a: das erfindungsgemäße, selbstklebend ausgerüstete Band im seitlichen Schnitt,
- Figur 3b: das erfindungsgemäße, selbstklebend ausgerüstete Band in einer ersten vorteilhaften Ausführungsform im seitlichen Schnitt,

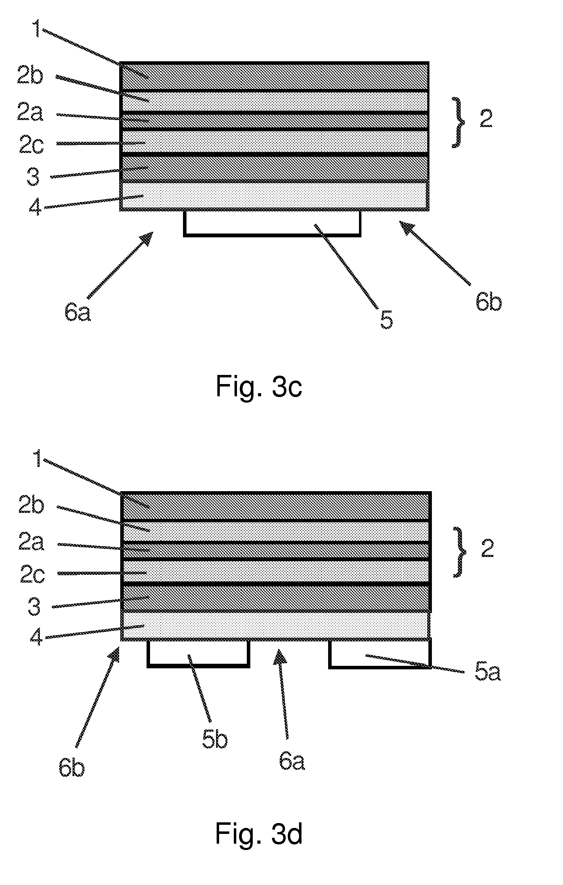

- Figur 3c: das erfindungsgemäße, selbstklebend ausgerüstete Band in einer zweiten vorteilhaften Ausführungsform im seitlichen Schnitt,
- Figur 3d: das erfindungsgemäße, selbstklebend ausgerüstete Band in einer dritten vorteilhaften Ausführungsform im seitlichen Schnitt und

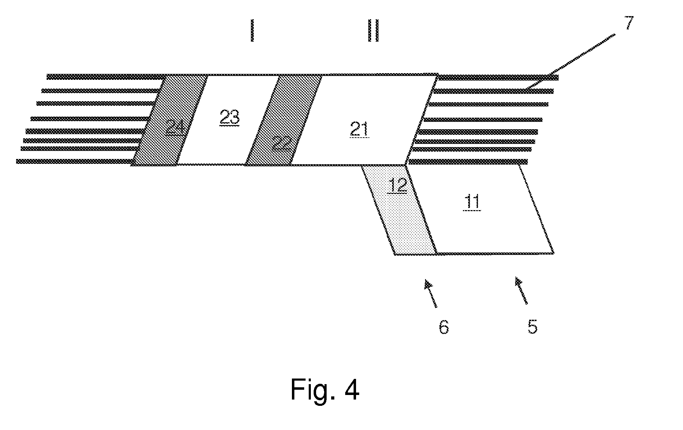

- Figur 4: die Verwendung des erfindungsgemäßen, selbstklebend ausgerüsteten Bands beim Ummanteln von Kabeln, sprich einen Kabelbaum.

In der Figur 3a ist das erfindungsgemäße, selbstklebend ausgerüstete Band im seitlichen Schnitt gezeigt.

Die Deckschicht A (1) besteht aus einem Nähwirkvlies mit 60 bis 300 g/m², die Deckschicht B (3) besteht einem Nadelvlies mit 40 bis 250 g/m².
Zwischen den beiden ist die Zwischenschicht C (2) vorgesehen, die aus einer mit Polyacrylatklebmasse (2b, 2c) beidseitig ausgerüsteten, 25 µm dicken Polyesterfolie (2a), wobei die Auftragsgewichte der Polyacrylatklebemasse (2b, 2c) jeweils 80 g/m², betragen.

Auf der Deckschicht B (3) ist eine druckempfindliche Klebebeschichtung (4) aufgebracht.

Gemäß der Figur 3b, die das erfindungsgemäße, selbstklebend ausgerüstete Band gemäß Figur 3a im seitlichen Schnitt zeigt, ist auf der Klebebeschichtung (4) genau ein Streifen (5) der Eindeckung vorhanden, und zwar derart, dass der Streifen (5) direkt an einer der Längskanten des Trägers liegt. Auf diese Weise ergibt sich ein in Längsrichtung des Bands erstreckender Klebestreifen (6).

In der Figur 3c ist der Streifen (5) mittig auf der Klebebeschichtung (4) aufgebracht, so dass sich zwei an den Kanten des Trägers in Längsrichtung des Klebebands erstreckende Klebestreifen (6a, 6b) ergeben.

In der Figur 3d sind zwei Streifen (5a, 5b) auf der Klebebeschichtung (3) aufgebracht, so dass sich zwei an den Kanten des Trägers in Längsrichtung des Klebebands erstreckende Klebestreifen (6a, 6b) ergeben.

In der Figur 4 ist ein Ausschnitt eines Kabelbaums gezeigt, der sich aus einer Bündelung von einzelnen Kabeln (7) zusammensetzt und der mit dem erfindungsgemäßen Klebeband ummantelt ist. Das Klebeband wird in einer spiralförmigen Bewegung um den Kabelbaum geführt.
Der gezeigte Ausschnitt des Kabelbaums zeigt zwei Wicklungen I und II des Klebebands. Nach links hin würden sich würden weitere Wicklungen erstrecken, diese sind hier nicht dargestellt.
Auf der Klebebeschichtung (4) ist ein Streifen (5) der Eindeckung vorhanden, so dass sich ein in Längsrichtung des Bands erstreckender Klebestreifen (6) ergibt. Es wechseln sich nichtklebende Bereiche (11, 21, 23) des Klebebands mit klebenden Bereichen (12, 22, 24) ab. (Die Abschnitte 22, 24 sind im Gegensatz zur offen liegenden Klebemasse 12 von außen nicht sichtbar, weshalb die dichtere Schraffur zur Darstellung gewählt ist.)

Die Ummantelung des Kabelbaums erfolgt derartig, dass der Klebemassestreifen (6) vollständig auf dem Klebeband verklebt. Eine Verklebung mit den Kabeln (7) ist ausgeschlossen.

Überraschend und für den Fachmann unerwartet zeigt das erfindungsgemäße Klebeband eine überragende Abreibfestigkeit und eine hohe Geräuschdämpfung.

Dies zeigen auch folgende vergleichende Messungen.

Ein erfindungsgemäßes, selbstklebend ausgerüstetes Band wird dabei mit einer reinen PET-Folie verglichen sowie mit einem Klebeband, dessen zwei Deckschichten nur durch eine Klebemasse miteinander verbunden sind und nicht durch eine PET-Folie, die beidseitig mit Klebemassen ausgerüstet ist.

Folgende Materialien sind untersucht worden:

### Vergleichsbeispiel 1

25 µm PET-Folie

### Vergleichsbeispiel 2

Nähwirklies (190 g/m²)
Polyacrylatklebemasse (80 g/m²)
Nadelvlies aus Polyester (100 g/m²)
Polyacrylatklebemasse (80 g/m²)

### Beispiel 3

Nähwirklies (190 g/m²)
Polyacrylatklebemasse (80 g/m²)
PET-Folie (25 µm)
Polyacrylatklebemasse (50 g/m²)
Nadelvlies aus PET (100 g/m²)
Polyacrylatklebemasse (80 g/m²)

### Vergleichsbeispiel 4

Nähwirkvlies (190 g/m²)
Polyacrylatklebemasse (80 g/m²)
Nähwirkvlies (190 g/m²)
Polyacrylatklebemasse (80 g/m²)

### Beispiel 5

Nähwirkvlies (190 g/m²)
Polyacrylatklebemasse (80 g/m²)
PET-Folie (25 µm)
Polyacrylatklebemasse (50 g/m²)
Nähwirkvlies (190 g/m²)
Polyacrylatklebemasse (80 g/m²)

Bei dem Nähwirkvlies handelt es sich um ein solches vom Typ Maliwatt, bestehend aus PET-Fasern der Länge 76mm und der Dicke 3 dtex und einem PET-Nähfaden der Stärke 75 dtex mit einem Gesamtflächengewicht von 190 g/m².
Als Polyacrylatklebemasse wird die Klebemasse acResin 258UV der BASF eingesetzt, ein UV-vernetzter Acrylathotmelt.

### Ergebnisse

Abriebbeständigkeit und Dämpfungseigenschaft nach LV 312:
Die Abriebbeständigkeit des Bands kann durch die erfindungsgemäße Zwischenschicht deutlich verbessert werden:

| **Beispiel** | **Abriebwert 10mm** | **Abriebwert 5mm** | **Dämpfungswert** |
|---|---|---|---|
| | Hübe | Hübe | dB (A) |
| Vergleichsbeispiel 1 | 500 | 200 | 1 |
| Vergleichsbeispiel 2 | 5888 | 3320 | 15 |
| Beispiel 3 | 11464 | 5470 | 15 |
| Vergleichsbeispiel 4 | 7183 | | 15 |
| Beispiel 5 | 13220 | | 15 |

Besonders vorteilhaft wirkt sich der Aufbau des Bandes auf die Schalldämpfung aus. Gleichzeitig werden die Forderungen bezüglich der Schalldämpfung aus OEM-Spezifikationen wie der LV 312 erfüllt.

Die Zwischenschicht mit dem Folienträger stellt darüber hinaus auch eine Barriereschicht dar für zum Beispiel Chemikalien und Betriebsmittel, so dass ein Vollsaugen des Trägers zuverlässig verhindert wird.

## Patentansprüche

1. Geräuschdämpfendes und hoch abriebfestes Band, vorzugsweise zum Umhüllen von langgestrecktem Gut wie insbesondere Leitungen oder Kabelsätze, aus einem Träger, der zumindest aus drei Schichten besteht, und zwar
einer ersten Deckschicht A,
einer zweiten Deckschicht B,
einer Zwischenschicht C, die sich zwischen den Deckschichten A und B befindet und die zumindest abschnittsweise mit den Deckschichten A und B fest verbunden ist,
**dadurch gekennzeichnet, dass**
die Deckschicht A aus einem Nähwirkvlies besteht,
die Deckschicht B aus einem Vlies und
die Zwischenschicht C aus einer Folie, die beidseitig mit einer viskoelastischen Klebemasse ausgerüstet ist.

2. Band nach Anspruch 1,
**dadurch gekennzeichnet, dass**
zumindest einseitig auf dem Träger eine Klebebeschichtung aufgebracht ist, vorzugsweise auf der Deckschicht B.

3. Band nach einem der Ansprüche 1 oder 2,
**dadurch gekennzeichnet, dass**
die Klebebeschichtung eine selbstklebende Klebebeschichtung ist, vorzugsweise auf Basis von Kautschuk-, Acrylat- oder Silikon.

4. Band nach zumindest einem der Ansprüche 1 bis 3,
**dadurch gekennzeichnet, dass**
die Folie in der Zwischenschicht C aus Polymeren wie PVC, Polyethylen, Polypropylen, Polyester, Polyurethan oder Polyamid besteht.

5. Band nach zumindest einem der vorherigen Ansprüche,
**dadurch gekennzeichnet, dass**
die Folie in der Zwischenschicht C eine Dicke von 5 bis 150 µm, insbesondere 12 bis 50 µm aufweist.

6. Band nach zumindest einem der vorherigen Ansprüche,
**dadurch gekennzeichnet, dass**
die viskoelastische Klebemasse auf der beidseitig ausgerüsteten Folie eine Selbstklebemasse auf Basis von Naturkautschuk, Polyacrylaten, Synthesekautschuk oder Silikonen ist, bevorzugt auf Basis von Polyacrylat.

7. Band nach zumindest einem der vorherigen Ansprüche,
**dadurch gekennzeichnet, dass**
für die Deckschicht B als Vlies ein Stapelfaservlies oder ein Spinnvlies gewählt wird, wobei eine Verfestigung des Vlieses durch Wasser- oder Luftstrahlen, durch mechanische Vernadelung oder durch thermische Behandlung vorliegt.

8. Band nach zumindest einem der vorherigen Ansprüche,
**dadurch gekennzeichnet, dass**
für die Deckschicht B als Vlies ein Nadelvlies gewählt wird, bevorzugt mit einem Flächengewicht von 40 bis 250 g/m², besonders bevorzugt mit einem Flächengewicht von 80 bis 150 g/m².

9. Band nach zumindest einem der vorherigen Ansprüche,
**dadurch gekennzeichnet, dass**
das Nähwirkvlies der Deckschicht A ein Flächengewicht von 60 bis 300 g/m², insbesondere von 150 bis 200 g/m² aufweist.

10. Band nach zumindest einem der vorherigen Ansprüche,
**dadurch gekennzeichnet, dass**
die Deckschicht A aus einem Nähwirkvlies mit 60 bis 300 g/m²,
die Deckschicht B einem Nadelvlies mit 40 bis 250 g/m² und
die Zwischenschicht C aus einer mit Polyacrylatklebmasse beidseitig ausgerüsteten, 12 bis 50 µm dicken Polyesterfolie besteht, wobei die Auftragsgewichte der Polyacrylatklebemasse jeweils 20 bis 200 g/m², insbesondere 80 bis 120 g/m² betragen.

11. Band nach zumindest einem der vorherigen Ansprüche,
**dadurch gekennzeichnet, dass**
das Band eine Abriebbeständigkeit nach LV 312 (Ausgabe Januar 2006) aufweist, nach der eine Anzahl von Hüben von mehr als 5000 überstanden werden.

12. Band nach zumindest einem der vorherigen Ansprüche,
**dadurch gekennzeichnet, dass**
das Band eine Geräuschdämpfung nach LV 312 (Ausgabe Januar 2006) von mehr als 10 dB (A) aufweist.

13. Verwendung eines Bands nach zumindest einem der vorherigen Ansprüche zum Ummanteln von langgestrecktem Gut, wie insbesondere Kabelsätzen, wobei das langgestreckte Gut in axialer Richtung von dem Band umhüllt wird oder das Band in einer schraubenförmigen Spirale um das langgestreckte Gut geführt wird.

14. Langgestrecktes Gut, wie insbesondere ein Kabelsatz, ummantelt mit einem Band nach zumindest einem der vorherigen Ansprüche.

15. Fahrzeug, enthaltend Kabelbaum nach Anspruch 14.
